# EUROPEAN PATENT SPECIFICATION

(11) **EP 2 037 342 B1**
(45) Date of publication and mention of the grant of the patent: **15.12.2010**
(21) Application number: 07017838.9
(22) Date of filing: 12.09.2007
(51) Int. Cl.: G05B 19/418, G05B 19/042, G05B 19/05

(54) **Method of implementing production execution system**
Verfahren zur Implementierung eines Produktionsausführungssystems
Procédé de mise en oeuvre du système d'exécution de production

(43) Date of publication of application: 18.03.2009
(73) Proprietor: SIEMENS AKTIENGESELLSCHAFT, 80333 München (DE)
(72) Inventor: Balzer, Peter, 16030 Avegno (GE) (IT); Magagnini, Marco, 16137 Genua (IT)
(74) Representative: Fischer, Michael

(56) References cited:
- EP-A- 1 422 619
- GB-A- 2 341 240
- US-A1- 2003 235 211
- US-A1- 2005 159 932
- US-A1- 2007 078 525
- YOUNG S L: "Technology ? The enabler for tomorrow's agile enterprise" ISA TRANSACTIONS, INSTRUMENT SOCIETY OF AMERICA. PITTSBURGH, US, vol. 34, no. 4, December 1995 (1995-12), pages 335-341, XP004020087 ISSN: 0019-0578

## Description

The present invention relates to a system and a method of implementing a production process in an industrial production system.

Manufacturing processes are highly automated and may be devided into several hierarchial layers. For example, at the highest level, the enterprise resource planning (ERP) takes place, which may be referred to as a business layer. At lower levels, the hardware implementation and control take place, which may be referred to as various control levels. Industry standard ISA S95 defines an intermediate layer that integrates and connects together business and control layers. That intermediate layer is referred to as manufacturing execution system (MES) that defines an MES process in terms of data and interactions between functions, such as resource management, resource allocation, dispatching, data collection and acquisition, quality assurance management, maintenance management, performance analysis, scheduling, document control, labour management and material and production tracking.

In the area of manufacturing execution systems, an extensive line of products, e.g., the SIMATIC® IT product from Siemens AG, Germany, is available for solving a variety of technical tasks. In this context, a broad range of IT solutions exist to connect the actual hardware close to the technical and/or logistical process to the application layer of the client driving the installation. Manufacturing execution systems have therefore been developed to meet all of the requirements of a service oriented architecture (SOA) to integrate seamless into a totally integrated automation (TIA). For example, SIMATIC® IT is the manufacturing execution system in TIA, and SIMATIC® PCS 7 is a process control system suitable for cooperation with a manufacturing execution system.

US 2005/0159932 represents the various levels of a manufacturing process in form of a pyramid. In that representation, the uppermost level is the ERP level, and the lowermost level of the pyramid is the automation/control level, wherein the MES level is the linking level. Programmable logic controllers (PLCs) in conjunction with visualization and process control systems (PCSs) are typically used on the automation level. Individual drives, actuators and sensors used in the production and/or manufacturing facilities are in direct contact with the systems of the automation level.

US 2005/0159932 explains further that an MES system contains a runtime system (RTS) for providing time-based sequence control of the components involved (subcomponents, modules, tasks, operating system processes etc.), and an engineering system (ES) for creating and editing programs which are intended for execution in the runtime system. A connection between the runtime system of the control facility (or of the automation system or the MES system) and a technical process is effected by way of inputs/outputs. The programming of the control facility and with it the specification of the behavior of the runtime system is carried out in the engineering system. The engineering system contains tools for configuring, planning and programming machines and controlling technical processes. The programs created in the engineering system are transferred to the runtime system RTS of a target system.

The control programs or installation specifications created by the engineering system are executed on a target system, for example, to control a technical process. The target system includes processors, storage facilities and a runtime system. The ES-created control programs are loaded onto the target system's runtime system. The underlying technical process, e.g., for an MES solution, is controlled via inputs and outputs. Actuators are influenced by the runtime system via the inputs and outputs. The technical process reacts by sending sensor data back to the runtime system via the inputs and outputs for further processing in the application.

Elements used for an installation description, or for a manufacturing or assembly solution (installation parts, installation components, machines, valves etc.) are linked in the engineering phase with meta information or physically contain meta information. Meta information may be information about the elements themselves (e.g., Who is using anelement?, With which other elements does it interact?). However, meta information can also comprise knowledge about an application, the business process to be implemented or the entire installation. This type of knowledge is present in the engineering phase (in functional specifications, design specifications or other installation documentation) and simply needs to be incorporated into the elements as meta information. In particular, the markup language XML (Extensible Markup Language) is suitable for describing meta information and linking it with elements.

The MES communicates with the PLCs of the automation layervia at least one software layer (e.g., a batch system). Such a software layer requires maintenance and usually software licenses. In some manufacturing plants, however, the costs for maintenance and licenses may not be economically acceptable.

Other similar methods of interfacing an MES with the PLCs are disclosed in "Technology... The enabler for tomorrow is agile enterprise" by Stephen L. Young, ISA Transactions 34(1995), No. 4.

There is, therefore, a need for an improved manner of operating a production process, in particular an improved manner of communication between the MES and at least one PLC of the automation layer.

Accordingly, one aspect of the various embodiments described herein involves a method of implementing a production process in an industrial production system having control equipment. According to the method, a plant model of the industrial production system is created, and based on the plant model, at least one interface for external access to the control equipment is defined. A strategy is defined for the interface representing a single function of a functionality provided by the interface. A method call is defined for activating the functionality provided by the interface.

In one embodiment based on the SIMATIC® product family, the SIMATIC® PCS 7 process control system refers to an external interface as "SFC type". Such an SFC type contains different PLC functions that are "control strategies" in the SIMATIC® PCS 7 process control system.

The novel features and method steps characteristic of the invention are set out in the claims below. The invention itself, however, as well as other features and advantages thereof, are best understood by reference to the detailed description, which follows, when read in conjunction with the accompanying drawings, wherein:
- Fig. 1: shows a schematic illustration of one embodiment of a production execution system, and
- Fig. 2: is an exemplary matrix illustration for an SFC type MIXER.

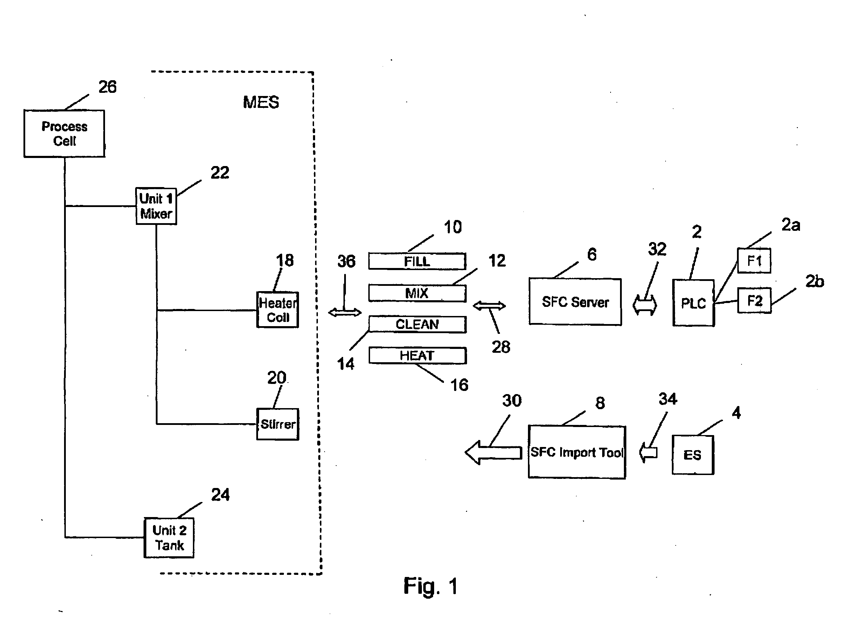

Fig. 1 shows a schematic illustration of one embodiment of a production execution system for a plant model. The plant model is part of a business logic defined by a software module contained in a MES software and configured to create the plant model. An exemplary MES software is the SIMATIC® IT software product, in which the software module used to create the plant model is referred to as "production modeler" and provided within a graphical software environment

The SIMATIC® IT MES software product is one example of a MES software in which the invention described herein may be applied. In the SIMATIC® IT MES software product, product specific features such as SFC types and control strategies are defined, as described below in more detail. The various embodiments of the invention are described herein with reference to the SIMATIC® IT MES software product. However, other MES software products may have different features. It is contemplated that the general concept of the invention, i.e., enabling direct communication between the MES and a PLC of the automation layer without a batch system, as described below, is applicable to any MES system.

The plant model describes all the elements that cooperate in fulfilling manufacturing targets, such as physical and logical elements. Physical elements are used in the manufacturing cycle, and represent the plant floor, such as reactors, mixers, a packaging line, or more complex ones, such as an assembly line, and a continuous casting machine. Logical elements are all software components configured to fulfil a processing/manufacturing cycle, with the goal of managing the necessary information to track and manage the entire production. Logical elements are, for example, a material manager, a mathematical model, a graphic interface, an order manager.

The plant model shown in Fig. 1 represents an exemplary production execution system, for example, of a bakery, and includes all physical installations of the bakery including basic functionalities, such as mixing and heating. The production process, i.e., how the installations and basic functionalities are used, is usually not part of the plant model. The various embodiments of the invention are herein described with reference to a baking task in a bakery. However, it is contemplated that the various embodiments of the invention are not limited to a specific manufacturing process, and apply to any other manufacturing process

As is well known, once a certain task is selected, i.e., producing a certain kind of cake, the production process starts by obtaining production instructions (e.g., the recipe), and providing the required equipment (e.g., mixer, oven) and ingredients (e.g., flour, sugar, eggs, liquid) so that the equipment and ingredients are available and ready for use when needed in the process. In that example, a process cell 26 represents a final manufacturing process, e.g., baking the dough in an oven.

A typical hierarchy in a plant is process cell - unit - equipment. Accordingly, in Fig. 1, the process cell 26 is at the highest hierarchial level followed by units 22, 24 and equipment 18, 20 at the lowest hierarchial level. In the illustrated example, the unit 22 represents a mixer, and the unit 24 a tank, whereas the equipment 18 represents a heater coil, and the equipment 20 a stirrer. The (mixer) unit 22 is coupled to the (heater coil) equipment 18 and the (stirrer) equipment 20. It is contemplated that the plant model may include more than the illustrated units 22, 24 and equipment 18, 20.

The left side of Fig. 1 is assigned to the MES layer (for illustrative purposes indicated by a dashed line) of a hierarchially layered manufacturing process. The right side of Fig. 1 is assigned to a customer application as a basis for a specific production execution solution. The components and functionalities assigned to the customer application include control equipment 2 (PLC) with assigned functionalities 2a, 2b, a server 6, an engineering station 4 (ES), and an engineering tool 8. The server 6 interacts with the MES layer via several functions 10, 12, 14, 16, as indicated by an arrow 28. These functions 10, 12, 14, 16, in turn, interact with the MES layer, as indicated by an arrow 36.

In the illustrated customer application, the control equipment 2 (PLC), functionalities 2a, 2b, server 6, and functions 10, 12, 14, 16 play a role during runtime. The engineering system 4 and the engineering tool 8 interact with the MES layer, as indicated by arrows 30, 34, during the phase of modeling the plant.

The PLC 2 allows obtaining a variety of information, such as the status and operating parameters of each assigned functionality 2a, 2b, such as of each sensor, actuator, drive, reactor and mixer used in the plant model. This information is available for runtime use and/or may be stored in a database. The functionalities implemented in the PLC 2 are available to the engineering system 4 as high-level method calls.

In a process control system, e.g., SIMATIC® process control system PCS 7, a sequential control system (SCS) allows a status or event driven execution of production processes based on sequencers. Generally, a sequential control system allows structuring production processes by breaking them down to consecutive steps. The steps define the actions to be executed and therefore the activities required in the production plant, e.g., turn a motor on, or open a valve. The passing of control from one step to the next is triggered by a transition with a defined step enabling condition, e.g., temperature reached, reactor empty.

A sequential control system contains at least one sequencer, which includes a series of steps and transitions between an initial step and a final step, and which then represents the actual production procedure. Its start condition is initialized so that the sequencer executes the steps and transitions when the sequential control system is in an "active" status.

Within a sequential control system, a sequential function chart (SFC) allows the graphic configuration and commissioning of sequential control functionalities. An SFC type includes a predetermined number of SFCs. Of each SFC typethere are several SFC instances- SFC types are an implementation of a type-instance pattern for PLC functionality used in the SIMATIC® process control system PCS 7. An SFC type provides a standardized interface for external access to a PLC functionality. An SFC instance is derived from an SFC type and may have at least initially properties identical to those of the SFC type.

In the embodiment shown in Fig. 1, the mixer unit 22 may require several control strategies. A control strategy represents a single function of a functionality provided by an SFC type. According to that embodiment, an SFC type MIXER is defined and assigned to the mixer unit 22. The SFC type MIXER may have instances such as other mixers. Other SFC types are assigned to the units 24. At least one control strategy is defined and assigned to each SFC type. For example, the SFC typer MIXER could implement control strategies FILL, MIX, CLEAN, and HEAT, which correspond to the functions 10, 12, 14 and 16, respectively. It is contemplated that the tank unit 24 requires control strategies, as well.

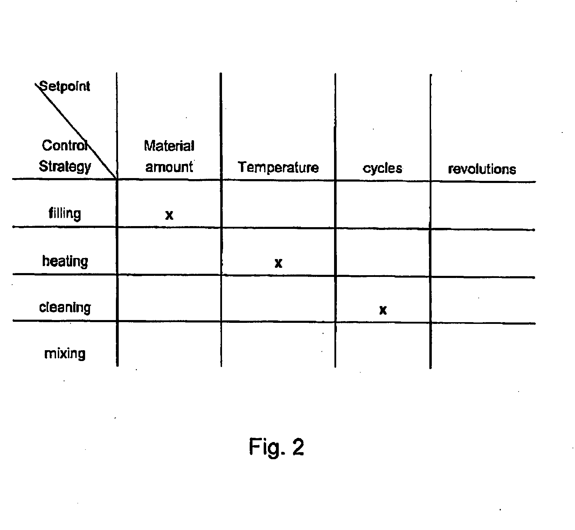

For each control strategy, at least one setpoint is defined. For example, the control strategy FILL may have as a setpoint the amount of material to be filled into the mixer 18, the control strategy HEAT may have as a setpoint a selected temperature, the control strategy CLEAN may have as a setpoint a selected number of cleaning cycles, and the control strategy MIX may have as a setpoint a selected number of revolutions. The allocation of a setpoint to a control strategy may be illustrated by a matrix, as shown in Fig. 2.

In one embodiment, the server 6 is referred to as SFC server and the engineering tool 8 is referred to as SFC import tool. The SFC server 6 is programmed to perform a protocol mapping in run time between the PLC 2 and method calls used in the MES application. As is known in the field of object-oriented programming (OOP), a method is associated with a particular object (i.e., a particular instance of a class that defines abstract characteristics of a thing (object)) and defines its abilities. A method call is then viewed as a request to an object to perform a certain task.

According to the invention, the SFC server 6 and the SFC import tool 8 form a linking layer between the PLC 2 and the MES layer. The MES layer is based on object-oriented programming. The PLC 2 uses a propriatary communication protocol, which includes, for example, a sequence of writing setpoints into PLC registers, writing bits (setting flags) into a control word, waiting for one or more PCL cycles and reading results out of other PLC registers. More particularly, a programming interface of an SFC instance includes a collection of variables that can be set and read. For example, a variable OCCUPIED may be used to indicate whether an assigned SFC instance is busy or availabe. To make the SFC instance unavailable, the variable is set to "1", and to release it, the variable is set to "0". Another variable ("STATE") may be used to indicate in which state (IDLE, STARTING, RUN, READY-TO-COMPLETE, COMPLETED, PAUSED, etc) an SFC instance currently is. Or, a variable may be used to provide a command to the SFC instance, a further variable may be used to check if the command has been accepted.

The SFC import tool 8 belongs to the engineering layer, whereas the SFC server 6 and the protocol mapping belong to the runtime. In the engineering layer, the SFC types are mapped to (object) classes, SFC instances are mapped to (object) instances, and control strategies are mapped to (object) methods. In runtime, the protocol mapping occurs. Hence, two protocols are mapped to each other; the protocol of the production modeler of the MES (e.g., SIMATIC® IT), and the protocol of the SFC types.

The SFC server 6 and the SFC import tool 8 allow the characteristics of the PLC 2 to be mapped into standard concepts of object-oriented programming. For example, a method call according to the object-oriented programming paradigm replaces the above exemplary sequence according to the proprietary protocol. In other words, the SFC server 6 transforms during runtime a method call into a series of actions in the proprietary communication protocol.

The system and method using the SFC server 6 and the SFC import tool 8 are based on the concept of exporting the engineering data of the PLC 2 and transforming the exported data into classes and instances with methods and events, according to a standard object-oriented modeling approach, which fits into the object-oriented plant model defined for the MES application. More particularly, within the engineering system 4, a number of SFC types (e.g., MIXER, TANK) are transformed into a corresponding number of classes, the control strategies are transformed into a method, and the setpoints are transformed into arguments. SFC instances are transferred into instances of the class generated for their SFC type.

In runtime, a functionality of the PLC is activated by the MES application by performing a synchronous method call. The caller remains blocked until the sequence of interaction with the PLC is finished. The setpoints are passed as arguments of the method call. A syntactic check is performed on the method arguments. During the execution of the PLC logic, status changes and setpoint changes of the PLC are reported to the MES application, in the form of events (method stubs where custom logic can be added).

As mentioned above, to set up a production execution system, a plant model is created that represents the production system and that is to be implemented in the target system. Among other purposes, the engineering system 4 is used to define the SFC types and associated control strategies for that plant, as shown in Fig. 2. The production modeler in the MES uses the plant model to implement the production process in the MES. Part of that process is, for example, the creation of production rules for that plant.

Once the plant model is implemented, the production execution system is ready for runtime performance. In one embodiment, the state of each SFC instance is polled and setpoints are set and verified. For example, a task may be to add a certain amount of liquid to the mixer unit 22, i.e., to perform the control strategy "filling" with the setpoint "material amount", as indicated in Fig. 2. For that task, it is determined whether the mixer unit 22 is available and/or in an error state. If this procedure indicates that the mixer unit 22 is ready for use, the task is set to RUN. As mentioned above, during runtime, the SFC server 6 transforms a method call under the object oriented programming paradigma into a series of actions in the proprietary communication protocol.

It is apparent that there has been described a system and method that fully satisfy the objects, means, and advantages set forth hereinbefore. Advantageously, the system and method facilitate communication between the MES and the PLC 2, in particular since the MES, which is set up under the object oriented programming paradigma, communicates directly with the PLCs of the automation layer without using a batch system.

## Claims

1. A method of implementing a production process in an industrial production system having control equipment (2), comprising:
a) creating a plant model of the industrial production system;
b) based on the plant model, defining at least one external interface for external access to the control equipment (2);
c) defining for the external interface a control strategy representing a single function of a functionality implemented by the control equipment, said function being provided by the external interface; said external interface being provided by a sequential function chart (SFC) type defined in a predetermined process control system; and
d) defining a method call for activating by a manufacturing execution system the single function provided by the external interface thereby transforming the method call during runtime into a series of actions in a proprietary communication protocol of the control equipment (2) which is activated via the method call.

2. The method of Claim 1, further comprising defining a setpoint for the control strategy.

3. The method of Claim 1 or 2, wherein a function of the control equipment is activated via a synchronous method call.

4. The method of Claim 1, wherein the predetermined process control system is a SIMATlC® IT PCS 7 control system.

5. The method of any preceding claim, wherein the method is implemented in a manufacturing execution system (MES).

## Patentansprüche

1. Verfahren zum Implementieren eines Produktionsprozesses in einem industriellen Produktionssystem mit Regeleinrichtung (2), das Folgendes umfasst:
a) Erstellen eines Anlagenmodells des industriellen Produktionssystems,
b) Definieren mindestens einer externen Schnittstelle für den externen Zugang zur Regeleinrichtung (2) auf der Grundlage des Anlagenmodells,
c) Definieren einer Regelstrategie für die externe Schnittstelle, die eine einzelne Funktion einer von der Regeleinrichtung implementierten Funktionalität darstellt, wobei die Funktion von der externen Schnittstelle bereitgestellt wird, wobei die externe Schnittstelle von einem Funktionsplantyp (FUP) bereitgestellt wird, der in einem vorgegebenen Prozessleitsystem definiert ist, und
d) Definieren eines Verfahrensaufrufs zum Aktivieren der von der externen Schnittstelle bereitgestellten Funktion durch ein Manufacturing Execution System (MES - Produktionsmanagementsystem), wodurch der Verfahrensaufruf während der Laufzeit in eine Reihe von Aktivitäten in einem proprietären Kommunikationsprotokoll der Regeleinrichtung (2) umgewandelt wird, die über den Verfahrensaufruf aktiviert wird.

2. Verfahren nach Anspruch 1, das ferner das Definieren eines Sollwertes für die Regelstrategie umfasst.

3. Verfahren nach Anspruch 1 oder 2, bei dem eine Funktion der Regeleinrichtung über einen synchronen Verfahrensaufruf aktiviert wird.

4. Verfahren nach Anspruch 1, bei dem es sich bei dem vorgegebenen Prozessleitsystem um ein Leitsystem SIMATIC® IT PCS 7 handelt.

5. Verfahren nach einem der vorhergehenden Ansprüche, wobei das Verfahren in einem Manufacturing Execution System (MES) implementiert wird.

## Revendications

1. Procédé de mise en oeuvre d'une opération de production dans un système de production industrielle ayant un équipement ( 2 ) de commande, dans lequel :
a ) on crée un modèle d'usine du système de production industrielle ;
b ) sur la base du modèle d'usine, on définit au moins une interface extérieure, pour accéder de l'extérieur à l'équipement ( 2 ) de commande ;
c ) on définit pour l'interface extérieure une stratégie de commande représentant une fonction unique d'une fonctionnalité mise en oeuvre par l'équipement de commande, la fonction étant fournie par l'interface extérieure ; l'interface extérieure étant dotée d'un type de diagramme fonctionnel séquentiel ( DFS ) défini dans un système de commande d'opération déterminé à l'avance ; et
d ) on définit un appel de procédé, pour activer, par un système d'exécution de fabrication, la fonction unique fournie par l'interface extérieure, en transformant ainsi l'appel de procédé, pendant un temps de fonctionnement, en une série d'actions dans un protocole de communication privée de l'équipement ( 2 ) de commande, qui est activé par l'appel de procédé.

2. Procédé suivant la revendication 1, dans lequel, on définit en outre un point de réglage de la stratégie de commande.

3. Procédé suivant la revendication 1 ou 2, dans lequel on active une fonction de l'équipement de commande par l'intermédiaire d'un appel de procédé synchrone.

4. Procédé suivant la revendication 1, dans lequel le système de commande d'opération déterminée à l'avance est un système de commande SIMATIC ( marque de fabrique )IT PCS 7.

5. Procédé suivant l'une quelconque des revendications précédentes, dans lequel on met en oeuvre le procédé dans un système d'exécution de fabrication ( SEM ).
